# EUROPÄISCHE PATENTSCHRIFT

(11) **EP 1 469 241 B1**
(45) Veröffentlichungstag und Bekanntmachung des Hinweises auf die Patenterteilung: **28.06.2006**
(21) Anmeldenummer: 04008164.8
(22) Anmeldetag: 03.04.2004
(51) Int. Cl.: F16K 31/34

(54) **Schwimmergesteuertes Servoventil**
Float-operated servo valve
Servovanne commandée par flotteur

(30) Priorität: 17.04.2003 DE 10317655
(43) Veröffentlichungstag der Anmeldung: 20.10.2004
(73) Patentinhaber: A. und K. Müller GmbH & Co. KG, 40595 Düsseldorf (DE)
(72) Erfinder: Berger, Gerd, 40593 Düsseldorf (DE)
(74) Vertreter: Feder, Wolf-Dietrich

(56) Entgegenhaltungen:
- DE-A- 19 815 754
- GB-A- 191 129 168

## Beschreibung

Die Erfindung betrifft ein schwimmergesteuertes Servoventil mit den Merkmalen aus dem Oberbegriff des Patentanspruchs 1. Derartige schwimmergesteuerte Servoventile sind bekannt und beispielsweise in DE 198 15 754 A1 beschrieben.

Bei derartigen schwimmergesteuerten Servoventilen tritt das Problem auf, dass beim Einströmen der Flüssigkeit in den den Schwimmer enthaltenden Auffangbehälter Luft in die im Auffangbehälter befindliche Flüssigkeit eingebracht wird und somit sich im Einströmbereich ein Flüssigkeits-Luftgemisch ausbildet, das eine geringere Dichte besitzt als die Flüssigkeit selbst. Wenn nun, insbesondere bei einer kompakten Bauweise des Ventils, der Schwimmer in diesem Bereich herabgesetzter Dichte angeordnet ist, verringert sich je nach dem Luftgehalt der Flüssigkeit der Auftrieb des Schwimmers, und es besteht die Gefahr, dass das Ventil nicht rechtzeitig schließt und es dadurch zu Überflutungen kommt.

Der Erfindung liegt die Aufgabe zugrunde, ein schwimmergesteuertes Servoventil mit den Merkmalen aus dem Oberbegriff des Patentanspruchs 1 so auszugestalten, dass auch bei einer Herabsetzung des Auftriebs des Schwimmers infolge eines Flüssigkeits-Luftgemisches im Auffangbehälter das rechtzeitige Schließen des Ventils sichergestellt ist.

Die Lösung dieser Aufgabe geschieht erfindungsgemäß mit den Merkmalen aus dem kennzeichnenden Teil des Patentanspruchs 1. Vorteilhafte Weiterbildungen des erfindungsgemäßen Ventils sind in den abhängigen Ansprüchen beschrieben.

Der Grundgedanke der Erfindung besteht darin, am Ventil eine Einrichtung zur Unterstützung der das Verschlussorgan in die Schließstellung führenden Bewegung des Schwenkarms anzuordnen, wobei der Druck des aus dem Ventilauslass austretenden Flüssigkeitsstrahls ausgenutzt wird, um eine die Bewegung des Schwenkarms unterstützende Bewegung eines am Ventilgehäuse angelenkten Hebels zu erzeugen. Je kräftiger der austretende Flüssigkeitsstrahl ist, desto mehr Luft wird in die Flüssigkeit eingebracht, aber umso größer ist auch die am Schwenkarm erzeugte unterstützende Kraft in Richtung der Schließstellung des Vefschlussorgans. Um ein sich aufschaukelndes intermittierendes Ein- und Ausschalten des Ventils zu vermeiden, hat es sich als vorteilhaft erwiesen, wenn Mittel zur Begrenzung der Schwenkbewegung des unterstützenden Hebels vorgesehen sind, die derart ausgebildet sind, dass unmittelbar bevor der Schwenkarm die Schließstellung des Verschlussorgans erreicht die weitere Schwenkbewegung des unterstützenden Hebels und/oder die Übertragung der Schwenkbewegung des Hebels auf den Schwenkarm blockiert wird.

Im folgenden wird anhand der beigefügten Zeichnungen ein Ausfügungsbeispiel für das erfindungsgemäße schwimmergesteuerte Servoventil näher erläutert.

In den Zeichnungen zeigen:
- Fig. 1: das Servoventil in einem Schnitt durch die Ventilachse mit in Seitenansicht dargestelltem Schwimmer in der geschlossenen Stellung;
- Fig. 2: das Servoventil nach Fig. 1 in einer perspektivischen Darstellung;
- Fig. 3: das Servoventil in einer Darstellung analog Fig. 1 in der geöffneten Stellung;
- Fig. 4: in vergrößerter Darstellung den Bereich X aus Fig. 3.

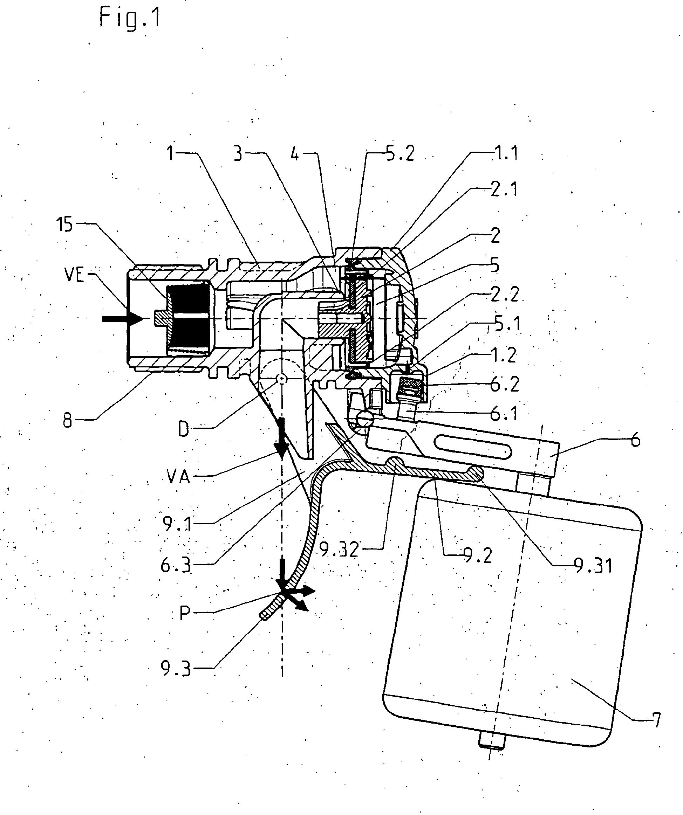

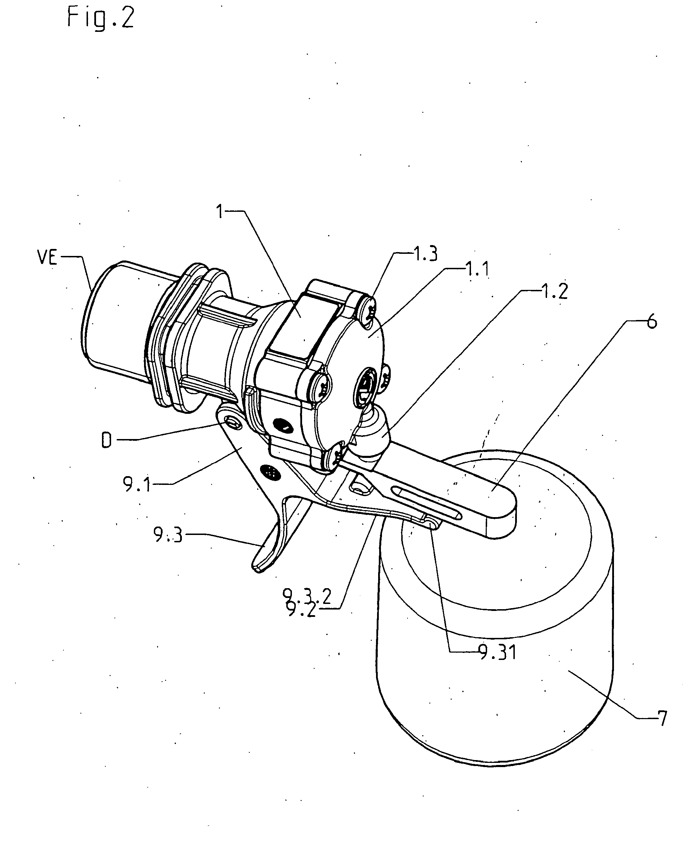

Das in den Fig. 1 bis 4 dargestellte schwimmergesteuerte Servoventil besitzt ein Ventilgehäuse, das aus einem den mit einem Anschlussgewinde 8 versehenen Ventileinlass VE, einen senkrecht zum Ventileinlass nach unten verlaufenden Ventilauslass VA sowie den Ventilsitz 3 enthaltenden Grundgehäuse 1 und einem mittels Schrauben 1.3 auf dem Grundgehäuse 1 befestigten Deckel 1.1 besteht. Im Ventileinlass VE ist ein Siebkörper 15 angeordnet, der das Ventil vor Verschmutzung schützt. An dieser Stelle kann auch ein Mengenregler angeordnet sein.

Im Innenraum des durch das Grundgehäuse 1 und den Deckel 1.1 gebildeten Ventilgehäuses befindet sich ein Differentialkolben 2, der an seiner dem Ventilsitz 3 zugewandten Seite den Ventilteller 2.1 trägt, der Teil einer Membran 2.2 ist, deren Außenrand zwischen dem Grundgehäuse 1 und dem Deckel 1.1 eingespannt ist. An der dem Ventilsitz 3 zugewandten Seite der Membran 2.2 befindet sich ein mit dem Ventileinlass VE verbundener Druckraum 4, der über den Ventilsitz 3 mit dem Ventilauslass VA verbunden ist. An der vom Ventilsitz 3 abgewandten Seite der Membran 2.2 ist ein Steuerraum 5 angeordnet, der einerseits über eine im Deckel 1.1 angeordnete Entlastungsbohrung 5.1 mit dem Außenraum und andererseits über einen außermittig im Differentialkolben 2 angeordneten Steuerkanal 5.2 mit dem Druckraum 4 verbunden ist. Die Entlastungsbohrung 5.1 ist mittels eines Verschlussorgans 6.2 von außen verschließbar. Das Verschlussorgan 6.2 ist über ein Aufsatzstück 6.1 mit der Oberseite eines Schwenkarms 6 verbunden, dessen Schwenkpunkt 6.3 am Grundgehäuse 1 des Ventils angelenkt ist und der an seinem freien Ende den Schwimmer 7 trägt.

Zum Schutz des Verschlussorgans 6.2 ist am Deckel 1.1 eine die äußere Öffnung der Entlastungsbohrung 5.2 umgebende, zum Schwenkarm 6 hin offene Glocke 1.2 angeordnet, in welcher das Verschlussorgan 6.2 angeordnet ist.

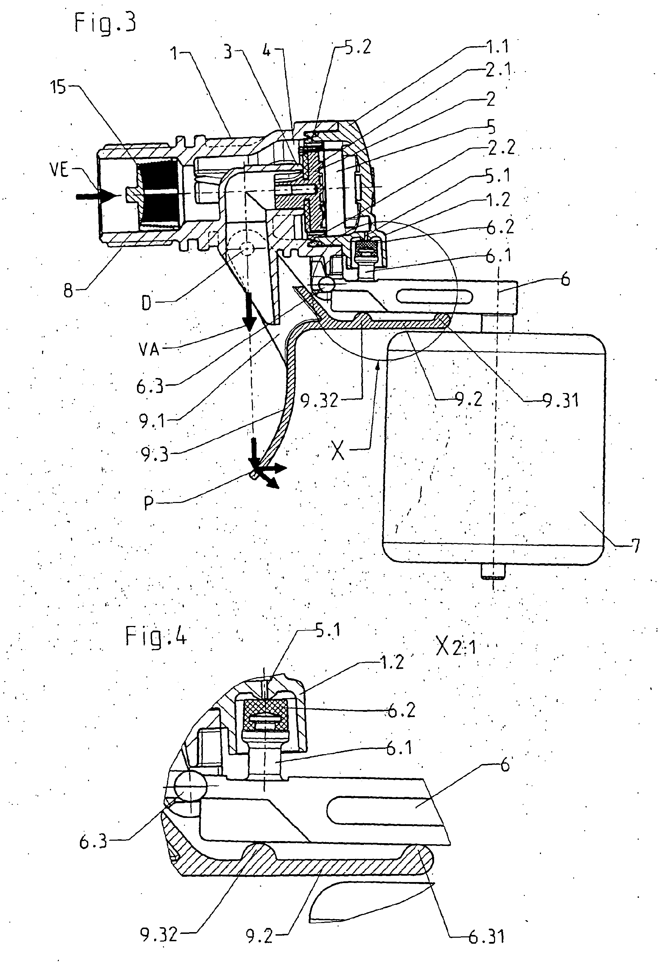

Die Funktionsweise des Ventils nach den Fig. 1 bis 4 entspricht der Funktionsweise eines üblichen schwimmergesteuerten Servoventils. Fig. 3 zeigt das Servoventil in einem Zustand, in welchem der Ventilteller 2.1 auf dem Ventilsitz 3 aufsitzt und das Servoventil somit geschlossen ist. Diese Schließstellung hält an, solange das Verschlussorgan 6.2 die Entlastungsbohrung 5.1 verschießt und somit ein Druckausgleich zwischen dem Steuerraum 5 und dem Druckraum 4 über den Steuerkanal 5.2 stattfindet. Es ergibt sich aufgrund unterschiedlicher Wirkflächen zu beiden Seiten der Membran 2.2 eine Kraft, die den Ventilteller 2.1 auf dem Ventilsitz 3 festhält. Fällt der Wasserspiegel im nicht dargestellten Aufnahmebehälter, so sinkt der Schwimmer 7 ab und der Schwenkarm 6 schwenkt derart, dass sich das Verschlussorgan 6.2 abwärts bewegt in die Stellung, die in Fig. 1 dargestellt ist, in welcher die Entlastungsbohrung 5.1 freigegeben ist. Dies führt zu einem Druckabfall im Steuerraum 5, und der auf die dem Ventilsitz 3 zugekehrte Seite der Membran 2.2 vom Ventileingang VE her wirkende Wasserdruck hebt den Ventilteller 2.1 vom Ventilsitz 3 ab, so dass die Flüssigkeit zum Ventilausgang VA strömt und der Flüssigkeitsstrahl in das Auffanggefäß einströmt. Der steigende Wasserspiegel im Auffanggefäß bewirkt, dass der Schwimmer 7 sich hebt, bis infolge der Mitbewegung des Schwenkarms 6 das Verschlussorgan 6.2 die Entlastungsbohrung 5.1 verschließt. Nunmehr schließt das Servoventil, wie in Fig. 3 dargestellt, und der Wasserfluss wird gestoppt. Wenn durch den in das Auffanggefäß einströmenden Flüssigkeitsstrahl Umgebungsluft mitgerissen wird und im Bereich der Auftreffstelle des Flüssigkeitsstrahls auf die Flüssigkeitsoberfläche unterhalb dieser Oberfläche ein Flüssigkeits-Luftgemisch gebildet wird, so sinkt an dieser Stelle die Dichte ab, und entsprechend verringert sich der Auftrieb am Schwimmer 7, wenn dieser in den Bereich dieses Flüssigkeits-Luftgemisches gerät. Dies ist insbesondere dann der Fall, wenn das Ventil kompakt aufgebaut ist und somit einen relativ kurzen Schwenkarm 6 aufweist. Der verringerte Auftrieb des Schwimmers 7 kann dazu führen, dass das Servoventil nicht rechtzeitig schließt und es zu Überflutungen kommt.

Um dies zu verhindern, ist das in den Fig. 1 bis 4 dargestellte schwimmer- gesteuerte Servoventil mit einer Einrichtung zur Unterstützung der Aufwärtsbewegung des Schwenkarms 6 in die Stellung versehen, in welcher das Verschlussorgan 6.2 die Entlastungsbohrung 5.1 verschließt.

Die Einrichtung besitzt einen zweiarmigen Hebel, der als in Längsrichtung gabelförmig gestaltetes Schwenkelement ausgebildet ist, mit einem Hauptarm 9.1, der am Ventilgehäuse 1 im Schwenkpunkt D angelenkt ist. Dieser Hauptarm 9.1 ist in aus den Zeichnungen nicht unmittelbar ersichtlicher Weise aus zwei parallel zueinander angeordneten Schwingen zusammengesetzt, die jeweils an einer der Seitenflächen des Grundgehäuses 1 angelenkt sind.

An den Hauptarm schließt sich ein erster Hebelarm 9.2 an, der sich an der Unterseite des Schwenkarms 6 über einen ersten Abstütznocken 9.31 abstützt. Der zweite Hebelarm 9.3, der mit dem ersten Hebelarm 9.2 einen vorgegebenen Winkel von im dargestellten Ausführungsbeispiel ca. 90° einschließt, ist an seinem vom ersten Hebelarm 9.2 nach außen weggekrümmten freien Ende schaufelartig ausgebildet und ragt in den Austrittsbereich des Flüssigkeitsstrahls unterhalb des Ventilauslasses VA hinein.

Wie aus Fig. 1 und 3 abzulesen, ist die Anordnung so, dass der aus dem Ventilauslass VA austretende Flüssigkeitsstrahl im Bereich P auf das schaufelartige freie Ende des zweiten Hebelarms 9.3 auftrifft. Durch den entstehenden Druck auf den zweiten Hebelarm 9.3 wird eine Kraft erzeugt, die eine Zentralkomponente in Richtung zum Schwenkpunkt D und eine Tangentialkomponente besitzt.

Durch die Tangentialkomponente wird eine Schwenkbewegung des gesamten zweiarmigen Hebels 9.1-9.2-9.3 um den Schwenkpunkt D erzeugt. Die entsprechende Bewegung des ersten Hebelarms 9.2 wird auf den Schwenkarm 6 übertragen und unterstützt dessen Bewegung in Richtung auf die Schließstellung des Verschlussorgans 6.2.

Um besonders günstige Bedingungen für das Entstehen der Tangentialkraft zu schaffen, die zur Aufwärtsbewegung des ersten Hebelarms 9.2 führt, ist der Schwenkpunkt D des Hauptarms 9.1 des Hebels gegenüber dem Schwenkpunkt 6.3 des Schwenkarms 6 in Richtung auf den Ventilauslass VA versetzt angeordnet und zwar so weit, dass der Schwenkpunkt D des Hauptarms 9.1 im dargestellten Ausführungsbeispiel etwa auf der Mittelachse des Ventilauslasses VA liegt.

Damit es gegen Ende des Füllvorgangs nicht zu einem aufschaukelnden, intermittierenden Ein- und Ausschalten des Servoventils kommt, ist eine Begrenzung der Schwenkbewegung des Hebels bzw. des ersten Hebelarms 9.2 vorgesehen. Hierzu ist an der dein Schwenkarm 6 zugekehrten Seite des ersten Hebelarms 9.2 in einem vorgegebenen Abstand vom ersten Abstütznocken 9.31 in Richtung auf den Schwenkpunkt D des Hebels ein zweiter Abstütznocken 9.32 angeordnet. Wenn sich der Schwenkarm 6 und der erste Hebelarm 9.2 soweit nach oben bewegt haben, dass beide Abstütznocken 9.31 und 9.32 an der Unterseite des Schwenkarms 6 anliegen, wird die Unterstützung des Schwenkarms 6 blockiert (siehe Fig. 3 und 4). Die Ausbildung der Abstütznocken und ihre Anordnung ist derart, dass diese Blockierung in einer Stellung des Schwenkarms 6 kurz vor Erreichen der Schließstellung des Verschlussorgans 6.2 stattfindet, so dass die Unterstützung des Schwenkarms 6 durch den ersten Hebelarm 9.2 nicht bis in die Schließstellung hinein wirkt sondern kurz davor endet. Die endgültige Schließstellung wird also nur durch das Anheben des Schwenkarms 6 vom Schwimmer 7 her erreicht.

Der erste Hebelarm 9.2 wird an seiner Unterseite von dem Schwimmer 7 untergriffe, so dass der Hebel 9.1-9.2-9.3 insgesamt auch bei geschlossenem Servoventil in einer stabilen, mit dem Schwimmer 7 gekoppelten Position verbleibt.

## Patentansprüche

1. Schwimmergesteuertes Servoventil mit einem in einem Ventilgehäuse (1) bewegbar angeordneten, einen Ventilteller (2.1) tragenden Differentialkolben (2), an dessen einer Seite ein mit dem Ventileinlass (VE) verbundener Druckraum (4) angeordnet ist, der über einen dem Ventilteller (2.1) gegenüberliegenden Ventilsitz (3) mit dem Ventilauslass (VA) verbunden ist und an dessen anderer Seite ein Steuerraum (5) angeordnet ist, der über eine mittels eines Verschlussorgans (6.2) verschließbare Entlastungsbohrung (5.1) mit dem Ventilauslass (VA) oder dem Außenraum und über einen Steuerkanal (5.2) mit dem Druckraum (4) verbunden ist, wobei das Verschlussorgan (6.2) mit einem den Schwimmer (7) tragenden Schwenkarm (6) derart verbunden ist, dass beim Anheben des Schwenkarms (6) in eine vorgegebene Endstellung das Verschlussorgan (6.2) die Entlastungsbohrung (5.1) verschließt, wodurch im Steuerraum (5) ein den Ventilteller (2.1) auf den Ventilsitz (3) aufsetzender Gegendruck aufgebaut wird, **gekennzeichnet durch** eine Einrichtung zur Unterstützung der das Verschlussorgan (6.2) in die Schließstellung führenden Bewegung des Schwenkarms (6) mit einem am Ventilgehäuse (1) angelenkten zweiarmigen Hebel (9.1-9.2-9.3), dessen erster Hebelarm (9.2) sich am Schwenkarm (6) in Richtung der in die Schließstellung führenden Bewegung abstützt, während der zweite Hebelarm (9.3) mit seinem schaufelartig ausgebildeten freien Ende in den Austrittsbereich des Flüssigkeitsstrahls vor dem Ventilauslass (VA) ragt, wobei die Anordnung derart ist, dass **durch** den Druck des Flüssigkeitsstrahls auf den zweiten Hebelarm (9.3) am Hebel eine Schwenkbewegung erzeugt wird, die über den ersten Hebelarm (9.2) auf den Schwenkarm (6) in Richtung auf die Schließstellung des Verschlussorgans (6.2) übertragen wird.

2. Servoventil nach Anspruch 1, **gekennzeichnet durch** Mittel zur Begrenzung der Schwenkbewegung des Hebels (9.1-9.2-9.3) derart, dass an einem vorgegebenen Punkt der Bewegungsbahn unmittelbar bevor der Schwenkarm (6) die Schließstellung des Verschlussorgans (6.2) erreicht, die Schwenkbewegung des Hebels und/oder die Übertragung der Schwenkbewegung des Hebels auf den Schwenkarm (6) blockiert wird.

3. Servoventil nach Anspruch 2, **dadurch gekennzeichnet, dass** an der dem Schwenkarm (6) zugekehrten Seite des ersten Hebelarms (9.2) im Bereich seines freien Endes ein erster Abstütznocken (9.31) angeordnet ist.

4. Servoventil nach Anspruch 3, **dadurch gekennzeichnet, dass** an der dem Schwenkarm (6) zugekehrten Seite des ersten Hebelarms (9.2) in einem vorgegebenen Abstand vom ersten Abstütznocken (9.31) in Richtung auf den Schwenkpunkt (D) des Hebels ein zweiter Abstütznocken (9.32) angeordnet ist.

5. Servoventil nach einem der Ansprüche 1 bis 4, **dadurch gekennzeichnet, dass** der Schwenkpunkt (D) des Hebels (9.1-9.2-9.3) gegenüber dem Schwenkpunkt (6.3) des Schwenkarms (6) in Richtung auf den Austrittsbereich des Flüssigkeitsstrahls versetzt angeordnet ist.

6. Servoventil nach einem der Ansprüche 1 bis 5, **dadurch gekennzeichnet, dass** der Hebel als im Längsschnitt gabelförmig gestaltetes Schwenkelement ausgebildet ist, mit einem Hauptarm (9.1), der am Ventilgehäuse (1) angelenkt ist und an den sich der erste und der zweite Hebelarm (9.2, 9.3) anschließen, die einen vorgegebenen Winkel einschließen

7. Servoventil nach Anspruch 6, **dadurch gekennzeichnet, dass** der Hauptarm (9.1) aus zwei parallel zueinander angeordneten Schwingen besteht, die jeweils an einer Seitenfläche des Ventilgehäuses (1) angelenkt sind.

8. Servoventil nach einem der Ansprüche 1 bis 7, **dadurch gekennzeichnet, dass** der erste Hebelarm (9.2) im Bereich eines äußeren Teilabschnitts seiner Länge vom Schwimmer (7) untergriffen wird.

9. Servoventil nach einem der Ansprüche 1 bis 8, **dadurch gekennzeichnet, dass** das Ventilgehäuse aus einem den Ventileinlass (VE), den Ventilauslass (VA), den Ventilsitz (3) und den Druckraum (4) umfassendes Grundgehäuse (1) und einem auf dem Grundgehäuse (1) befestigten, den Steuerraum (5) abdeckenden Deckel (1.1) aufgebaut ist, wobei im Deckel (1.1) die Entlastungsbohrung (5.1) angeordnet ist, die durch das außerhalb des Deckels auf dem Schwenkarm (6) angeordnete Verschlussorgan (6.2) von außen verschließbar ist.

10. Servoventil nach Anspruch 9, **dadurch gekennzeichnet, dass** am Deckel (1.1) eine die äußere Öffnung der Entlastungsbohrung (5.1) umgebende, zum Schwenkarm (6) hin offene Glocke (1.2) angeordnet ist, in welcher das Verschlussorgan (6.2) angeordnet ist.

## Claims

1. Float-controlled servo valve with a differential piston (2) which is disposed in a mobile manner in a valve housing (1), bears a valve disc (2.1) and on one side of which a pressure chamber (4) connected to the valve inlet (VE) is disposed, the pressure chamber being connected to the valve outlet (VA) via a valve seat (3) lying opposite the valve disc (2.1), and on the other side of which a control chamber (5) is disposed, the latter being connected to the valve outlet (VA) or the outer chamber via a relief bore (5.1), which can be closed by means of a closure member (6.2), and to the pressure chamber (4) via a control duct (5.2), wherein the closure member (6.2) is connected to a swivel arm (6), which bears the float (7), such that the closure member (6.2) closes the relief bore (5.1) when the swivel arm (6) is lifted into a predetermined end position, whereby a counterpressure which places the valve disc (2.1) on the valve seat (3) is built up in the control chamber (5), **characterised by** a device for assisting the movement of the swivel arm (6) which leads the closure member (6.2) into the closing position, which device has a two-armed lever (9.1-9.2-9.3) which is articulated to the valve housing (1) and the first lever arm (9.2) of which is supported at the swivel arm (6) in the direction of the movement leading into the closing position, while the second lever arm (9.3) projects with its free end, which is formed like a shovel, into the outlet region of the liquid jet before the valve outlet (VA), wherein the arrangement is such that a swivelling movement is produced by the pressure of the liquid jet on the second lever arm (9.3) at the lever and is transmitted via the first lever arm (9.2) to the swivel arm (6) in the direction of the closing position of the closure member (6.2).

2. Servo valve according to Claim 1, **characterised by** means for limiting the swivelling movement of the lever (9.1-9.2-9.3) such that the closing position of the closure member (6.2) is reached at a predetermined point of the path of movement immediately before the swivel arm (6), and the swivelling movement of the lever and/or the transmission of the swivelling movement of the lever to the swivel arm (6) are/is blocked.

3. Servo valve according to Claim 2, **characterised in that** a first support lobe (9.31) is disposed on the side of the first lever arm (9.2) which faces the swivel arm (6) in the region of its free end.

4. Servo valve according to Claim 3, **characterised in that** a second support lobe (9.32) is disposed on the side of the first lever arm (9.2) which faces the swivel arm (6) at a predetermined distance from the first support lobe (9.31) in the direction of the swivel point (D) of the lever.

5. Servo valve according to any one of Claims 1 to 4, **characterised in that** the swivel point (D) of the lever (9.1-9.2-9.3) is disposed in a staggered manner with respect to the swivel point (6.3) of the swivel arm (6) in the direction of the outlet region of the liquid jet.

6. Servo valve according to any one of Claims 1 to 5, **characterised in that** the lever is formed as a swivel element which is fork-shaped in longitudinal section, with a main arm (9.1) which is articulated to the valve housing (1) and which is adjoined by the first and the second lever arm (9.2, 9.3), which form a predetermined angle.

7. Servo valve according to Claim 6, **characterised in that** the main arm (9.1) consists of two rocker arms which are disposed parallel to one another and which are in each case articulated to a side face of the valve housing (1).

8. Servo valve according to any one of Claims 1 to 7, **characterised in that** the float (7) engages under the first lever arm (9.2) in the region of an outer sub-portion of its length.

9. Servo valve according to any one of Claims 1 to 8, **characterised in that** the valve housing is composed of a basic housing (1), which encompasses the valve inlet (VE), the valve outlet (VA), the valve seat (3) and the pressure chamber (4), and a cover (1.1) fastened to the basic housing (1) and covering the control chamber (5), wherein the relief bore (5.1) is disposed in the cover (1.1), which bore can be closed from outside by the closure member (6.2) disposed outside of the cover on the swivel arm (6).

10. Servo valve according to Claim 9, **characterised in that** a bell (1.2) surrounding the outer opening of the relief bore (5.1) and open towards the swivel arm (6) is disposed at the cover, in which bell the closure member (6.2) is disposed.

## Revendications

1. Servovanne commandée par flotteur, comprenant, monté mobile dans un carter de vanne (1), un piston différentiel (2) portant un disque d'obturation de vanne (2.1), et sur un côté duquel est agencée une chambre de pression (4) reliée à l'entrée de vanne (VE) et reliée à la sortie de vanne (VA) par l'intermédiaire d'un siège de vanne (3) opposé au disque d'obturation de vanne (2.1), et de l'autre côté duquel est agencée une chambre de commande (5) qui est reliée à la sortie de vanne (VA) ou à l'espace extérieur environnant par l'intermédiaire d'un alésage de décharge (5.1) pouvant être fermé au moyen d'un organe de fermeture (6.2), et à la chambre de pression (4) par l'intermédiaire d'un canal de commande (5.2), l'organe de fermeture (6.2) étant relié à un bras pivotant (6) portant le flotteur (7) de manière telle, que lors du soulèvement du bras pivotant (6) dans une position terminale prescrite, l'organe de fermeture (6.2) ferme l'alésage de décharge (5.1) en produisant en conséquence l'établissement, dans la chambre de commande (5), d'une contre-pression appliquant le disque d'obturation de vanne (2.1) sur le siège de vanne (3), **caractérisée par** un système permettant d'assister le mouvement du bras pivotant (6), qui amène l'organe de fermeture (6.2) dans la position de fermeture, et comprenant un levier à deux bras (9.1-9.2-9.3) articulé sur le carter de vanne (1), dont le premier bras de levier (9.2) s'appuie sur le bras pivotant (6) dans la direction du mouvement menant à la position de fermeture, tandis que le deuxième bras de levier (9.3), s'engage, avec son extrémité libre réalisée en forme d'aube, dans la zone de sortie du jet de liquide devant la sortie de vanne (VA), l'agencement étant tel, que la pression du jet de liquide sur le deuxième bras de levier (9.3) engendre sur le levier un mouvement de pivotement qui est transmis, par l'intermédiaire du premier bras de levier (9.2), au bras pivotant (6), en direction de la position de fermeture de l'organe de fermeture (6.2).

2. Servovanne selon la revendication 1, **caractérisée par** des moyens destinés à limiter le mouvement de pivotement du levier (9.1-9.2-9.3) de manière telle, qu'en un point prescrit de la trajectoire de mouvement, directement avant que le bras pivotant (6) atteigne la position de fermeture de l'organe de fermeture (6.2), le mouvement de pivotement du levier et/ou la transmission du mouvement de pivotement du levier au bras pivotant (6) soient bloqués.

3. Servovanne selon la revendication 2, **caractérisée en ce que** sur le côté du premier bras de levier (9.2), qui est dirigé vers le bras pivotant (6), dans la zone de son extrémité libre, est disposée une première came d'appui (9.31).

4. Servovanne selon la revendication 3, **caractérisée en ce que** sur le côté du premier bras de levier (9.2), qui est dirigé vers le bras pivotant (6), à une distance prescrite de la première came d'appui (9.31) en direction du point de pivotement (D) du levier, est disposée une deuxième came d'appui (9.32).

5. Servovanne selon l'une des revendications 1 à 4, **caractérisée en ce que** le point de pivotement (D) du levier (9.1-9.2-9.3) est disposé, par rapport au point de pivotement (6.3) du bras pivotant (6), de manière décalée en direction de la zone de sortie du jet de liquide.

6. Servovanne selon l'une des revendications 1 à 5, **caractérisée en ce que** le levier est réalisé en tant qu'élément pivotant de configuration en forme de fourchette en coupe longitudinale, et comprend un bras principal (9.1) qui est articulé au carter de vanne (1) et auquel se raccordent le premier et le deuxième bras de levier (9.2, 9.3) formant entre eux un angle prescrit.

7. Servovanne selon la revendication 6, **caractérisée en ce que** le bras principal (9.1) est constitué de deux ailes disposées parallèlement l'une à l'autre et articulées chacune sur une surface latérale du carter de vanne (1).

8. Servovanne selon l'une des revendications 1 à 7, **caractérisée en ce que** le premier bras de levier (9.2), dans la zone d'un tronçon partiel extérieur de sa longueur, surmonte le flotteur (7).

9. Servovanne selon l'une des revendications 1 à 8, **caractérisée en ce que** le carter de vanne est composé d'un carter de base (1) qui englobe l'entrée de vanne (VE), la sortie de vanne (VA), le siège de vanne (3) et la chambre de pression (4), et d'un couvercle (1.1) qui est fixé sur le carter de base (1) et couvre la chambre de commande (5), l'alésage de décharge (5.1) étant agencé dans le couvercle (1.1) et pouvant être fermé de l'extérieur par l'organe de fermeture (6.2) disposé à l'extérieur du couvercle, sur le bras pivotant (6).

10. Servovanne selon la revendication 9, **caractérisée en ce que** sur le couvercle (1.1) est agencée une cloche (1.2) qui entoure un orifice extérieur de l'alésage de décharge (5.1) et est ouverte en direction du bras pivotant (6), et dans laquelle est agencé l'organe de fermeture (6.2).
